# EUROPEAN PATENT APPLICATION

(11) **EP 2 883 598 A1**
(43) Date of publication of application: **17.06.2015**
(21) Application number: 13196724.2
(22) Date of filing: 11.12.2013
(51) Int. Cl.: B01D 63/04, B01D 61/18, C02F 1/44

(54) **Hollow fibre module water filtration system with air distributor**

(71) Applicant: Siemens Aktiengesellschaft, 80333 München (DE)
(72) Inventor: Diaz Mesa, Armando, 0676 Osol (NO); Mehlen, Mari, 0591 Oslo (NO)

(57) **Abstract**

It is described an arrangement for filtering water, in particular for injection into a bore well, the arrangement comprising: a plurality of filter elements (129) arranged side by side, each filter element comprising bundle of hollow fibres (113) having fine pores and bbeing fixed in an upper header plate (119/120), the vessel having an axial lower gas entry (123) connceted a gas distribution curved plate/ dome (121) to equally distribute air between the bundles.

## Description

### Field of invention

The present invention relates to an arrangement and to a method for filtering water, in particular for preparing the water for injection into a bore well, and further relates to a filter system for filtering water.

### Art Background

A filtering system may be known for filtering seawater in order to remove biological material, sand, debris, bacteria and/or shell from the water which may then be utilized in a gas and oil exploration procedure to inject the filtered water into an oil bore well.

Thereby, the filtering itself may take place on an oil platform, in particular above the sea level, and the filtered water may be pumped down below the sea level in a depth of between 2000 m and 4000 m. A conventional ultra-filtration system for oil and gas (SCUF) may use hollow fiber membranes as filter elements for filtering.

In particular, the membrane element L20 S by Siemens may be known and may be utilized or employed in embodiments of the present invention. In such a SCUF vessel, water (containing contaminating particles, in particular solid particles) is fed into the vessel and removed in a slot between membrane elements and the lower distribution plate.

It has been observed that solids may build up in the center of the membrane elements. In a long-term operation, this may result in a tearing on the membrane straw and may result in reduced filter capacity.

There may be a need for an arrangement and for a method for filtering water and there may be a need for a filter system for filtering water, wherein the filtering functionality is reliable and where the filter capacity is sufficient or improved compared to conventionally known methods and systems.

### Summary of the Invention

This need may be met by the subject matter according to the independent claims. Advantageous embodiments of the present invention are described by the dependent claims.

According to an embodiment of the present invention, it is provided an arrangement for filtering water (by those skilled in the art also called (cylindrical) membrane element comprising plural straws), in particular for injection into a bore well, the arrangement comprising a plurality of filter elements (also called straws) arranged side by side (in particular leaving some space in between for water to be filtered to approach an outside surface of the filter elements), each filter element comprising a tube (in particular circular in cross-section) having fine pores, allowing water to enter an inside channel (or lumen or duct) of the tube but preventing particles having a size larger than a threshold size to enter (through the fine pores) the inside channel, a seal system (integrally formed or comprising plural seal portions, also called a (bottom) potting for the straws) for closing (such that water cannot pass through the seal) the channels of the tubes at longitudinal ends of the respective tubes, wherein the seal system has at least one opening (or several openings) providing communication (i.e. exchange of water or liquid including suspended and/or dissolved particles) between an outside of the plurality of filter elements and an inside of the plurality of filter elements, the inside of the plurality of filter elements being surrounded by tubes but being outside the channels of all the tubes.

One membrane element (e.g. total diameter between 100 mm and 140 mm) may comprises 5000 to 8000 straws, having a length between 1.5 m and 2.5 m, in particular about 1.8 m. The straws may be surrounded by a PVC grid as a support structure. A straw may be 1.0 mm to 1.4 mm in diameter, with an inner diameter (of the inside channel) of 0.5 mm to 0.7 mm. The seal or potting may have length of between 7 cm and 10 cm.

The arrangement may in particular be suitable for filtering seawater, wherein the filtered seawater may then be used for injection into a bore well or oil well in order to perform oil and/or gas exploration and/or conveying. Each filter element may also be referred to as a membrane cylinder and may comprise membrane straws (also referred to as tubes) which are (relatively) densely packed close to each other, however with some same in between. In particular, the tube of the filter element may also be referred to as a straw. The tube or the straw may be made of or may comprise membrane material, in particular fiber membrane material. The fine pores may be adapted regarding their (passage) sizes in order to prohibit passage of particles to be filtered out from the seawater. In other embodiments, the tube or straw may not or need not comprise any membrane material but may be made of other materials providing fine pores having the suitable passage sizes.

The inside channel (or inside duct of the tube) may collect the filtered water and may allow to transport the filtered water along the channel (in particular in a direction of a longitudinal axis of the respective tube upwards) from the longitudinal end of the respective tube to another longitudinal end of the respective tube, wherein the tube may in particular be oriented such that its longitudinal axis is arranged in a vertical direction. Thus, during a filtering procedure, unfiltered seawater may pass from an outside of a respective tube through the fine pores into the inside channel to become filtered and may then be transported vertically upwards to another end of the respective tube where the channel is not being closed such that the filtered water may exit the channel of the tube.

In particular, when the plurality of filter elements are arranged within a vessel, the vessel may comprise a bottom port and also a top port, wherein water to be filtered may enter at the bottom port and the filtered water may exit at the top port. Thereby, the filtered water exiting the inside channel of the tubes of the filter elements may be directed to the top port.

The seal system for closing the channels of the tubes at longitudinal ends (in particular vertically lower ends) of the respective tubes may comprise several seal system portions (e.g. each for a respective tube) or may comprise an integrally formed structure sealing all tubes, i.e. closing the respective channels of the tubes. The at least one opening of the seal system may comprise a small bushing or a short pipe that runs through the seal system in order to provide a communication between an outside of the plurality of filter elements and an inside of the plurality of filter elements. Alternatively, the at least one opening may be drilled into an integrally formed seal structure, e.g. manufactured from a resin material. The at least one opening may provide exactly one opening or more than one opening, such as two openings, three, four, five, six, seven, eight, nine, ten or ten to 100 openings, which may be distributed or arranged across an entire surface of the seal system (in particular a horizontal surface). The seal system further may have a function for fixing the plural filter elements such that they are supported close to each other and side by side.

In particular, the at least one opening may also be referred to as a center hole in the potting of the sealed end of the membrane element or filter element. By providing the at least one opening in the seal system, backwash water may flush out with high velocity and effectively remove all solid or particles piled up in the center of the filter element together with the solids at the brim of the element.

In particular, it has been observed that in a membrane cylinder comprising plural filter elements, particles, in particular solid particles, may enrich in an inside of the plurality of filter elements and may thereby clog the individual filter elements, in particular the fine pores. Furthermore, even during a cleaning procedure involving exposing the filter elements to bubble enriched water (in particular turbulent water), even if the solid particles adhering to the filter elements are released by the air bubble enriched water, the released particles may be trapped within a conventional membrane cylinder, because the released particles may not wash out from the membrane cylinder comprising the plurality of filter elements. By providing the at least one opening in the seal system, the released particles or the released debris may effectively leave the plurality of filter elements and may be removed from the plurality of filter elements, thereby improving the filter capacity of the plurality of filter elements and thereby in general improving the filtering arrangement.

In particular, the cleaning of the membrane elements (or filter elements) may be improved. Further benefits may be a reduced possibility for failures due to reduced lifetime, reduced need for chemical cleaning, improved ordinary cleaning and improved performance of the filter elements.

According to an embodiment of the present invention, the plurality of filter elements is arranged in a form of a circular cylinder, the at least one opening is arranged on a longitudinal axis of the cylinder in a center of the seal system, wherein in particular the at least one opening is a single opening. The circular cylinder may also be referred to as membrane cylinder. The form of a circular cylinder may have advantages in that it may be possible to closely arrange plural filter elements close to each other, thereby improving the filter capacity and/or performance. To provide the at least one opening in the center of the seal system (i.e. in particular such that the at least one opening is surrounded by a same number of tubes in every radial direction), particles released from the tubes during a cleaning process may effectively be removed from the inside of the plurality of filter elements.

According to an embodiment of the present invention, the longitudinal ends of the tubes surround the opening in an annular manner, wherein in particular the opening has a circular cross section.

When the opening is surrounded in an annular manner by the longitudinal ends of the tubes, debris or particles released from the tube may be collected from a large number of tubes and may effectively be removed during a cleaning process by passage (in particular vertically down) through the at least one opening from the inside of the plurality of filter elements to an outside of the plurality of filter elements, in particular into a lower portion of a vessel harboring the plural filter elements.

According to an embodiment of the present invention, the at least one opening comprises several openings arranged across a lateral extent of the seal system perpendicular to longitudinal axes of the tubes.

When several openings are provided within the seal system, released particles may selectively be removed from the inside of the plurality of filter elements, so that the filter capacity may be maintained or re-established by a cleaning procedure. In particular, the several openings may be distributed across the lateral extent of the seal system such that a higher density of openings (or a higher fraction of passage surface) is present at a first radial position than at a second radial position, wherein the second radial position is farther away radially from the longitudinal axis of the respective plurality of filter elements. In particular, the longitudinal axis of the plurality of filter elements may be a symmetry axis of the circular cylinder, when the plural filter elements are arranged in a form of a circular cylinder. Thereby, a higher amount of particles observed or expected at a center of the membrane cylinder may be accounted for.

According to an embodiment of the present invention, the seal system embeds the longitudinal ends of the tubes and closes spaces between the tubes at the longitudinal ends of the tubes.

When the longitudinal ends of the tube are embedded by the seal system, they are advantageously also fixed and thereby stabilized. When spaces between the tubes at the longitudinal ends of the tubes are closed, then it is easier to manufacture the seal system which primarily has the function to close the channels of the tubes of the filter elements.

According to an embodiment of the present invention, the seal system comprises solidified resin, wherein in particular the opening is made by drilling.

Manufacturing the filtering arrangement may comprise providing liquid resin and putting the plural filter elements with one longitudinal end into the liquid resin. Thereby, the respective channels of the tubes may be closed. Further on, the liquid resin may be allowed to solidify by cross-linking using an added cross-linking agent, in particular causing polymerization of the resin. Thereby, the longitudinal ends of the tubes may be fixed close to each other. Advantageously, in the solidified resin, the opening may be manufactured in an easy manner by drilling through the solidified resin.

According to an embodiment of the present invention, the arrangement further comprises a support structure enclosing the plurality of filter elements, the support structure, in particular a grating, having a plurality of holes, in particular having a size between 5 mm x 5 mm and 10 mm x 10 mm, in particular 7 mm x 7 mm, wherein the plurality of filter elements further in particular comprises 5000 to 10000 filter elements.

The support structure may improve the strength of the filtering arrangement, in particular the strength of the plurality of filter elements arranged side by side. Thereby, the support structure nevertheless allows entry of water to be filtered into the inside of the plurality of filter elements. Providing a high number of filter elements may improve and enhance the filter capacity.

According to an embodiment of the present invention, at least one of the tubes comprises membrane material, in particular fiber membrane material, wherein in particular the fine pores have the threshold size between 0.01 to 0.1 micro meter, in particular between 0.03 and 0.05 micro meter, for filtering biological material and/or bacteria and/or shell and/or sand particles. The fiber membrane material or the membrane material may for example be the membrane element L20 S by Siemens. In particular, the membrane element may be suitable for ultra-filtration. Thereby, the arrangement may be adapted to effectively filter out very small particles which are typically encountered or found in seawater.

According to an embodiment of the present invention, the opening has a width between 5 mm and 15 mm, in particular between 7 mm and 12 mm, wherein in particular the opening has a length between 5 cm and 10 cm, further in particular between 7 cm and 9 cm.

The width of the opening should be selected such as to effectively remove particles released from the filter elements. If the width of the opening is too small, the particles may not easily pass through the opening but may instead build up within the inside of the plural filter elements. However, if the width of the opening is too large, then the number of active filter elements contributing to the filtering process may be reduced, since in the area of the opening no tube can be arranged. Thus, a compromise has to be found regarding the width of the opening.

The inventors found that the specified width has advantages and represents a good compromise between the above-mentioned goals.

According to an embodiment of the present invention, it is provided a method for filtering water, in particular for injection into a bore well, the method comprising allowing water to be filtered to enter inside channels of tubes having fine pores and being comprised in a plurality of filter elements arranged side by side, preventing particles having a size larger than a threshold size to enter the inside channels, wherein the inside channels of the tubes are closed at longitudinal ends of the respective tubes by a seal system; and cleaning the plurality of filter elements by: releasing particles adhered at an outside of the tubes during filtering and allowing the particles to reach from an inside of the plurality of filter elements to an outside of the plurality of filter elements via at least one opening in the seal system, the inside of the plurality of filter elements being surrounded by tubes but being outside the channels of all the tubes.

It should be understood that features individually or in any combination disclosed, described, employed or provided for an arrangement for filtering water may also be applied, provided or employed for a method for filtering water according to an embodiment of the present invention and vice versa.

The method may be performed above the sea level, for example at a platform, a vessel or a ship. The cleaning may be performed in a periodic manner and/or repeatedly, in particular whenever it is observed that the filtering performance of the filtering system has declined.

According to an embodiment of the present invention, the method further comprises creating air bubble enriched water by introducing air into water; exposing the plurality of filter elements to the air bubble enriched water, thereby releasing at least some of the particles adhered to the outside of the tubes.

Air bubble enriched water may be created by first partially draining a vessel in which the plurality of filter elements is arranged and then introducing (or injecting with high velocity) air via a bottom port. The air bubble enriched water may represent turbulent water and may subject the plural filter elements to mechanical shaking or vibration, thereby at least partially releasing particles adhered to the outside of the tubes of the filter elements. Thereby, an effective cleaning procedure may be performed, re-establishing the filter performance.

According to an embodiment of the present invention, it is provided a filter system for filtering water (from suspended particles), comprising a vessel having an internal space and a port at a bottom side for allowing entry of air into the internal space partially filled with water during a procedure for cleaning the plural filter elements; a plurality of arrangements for filtering water according to one of the preceding embodiments arranged within the internal space; a plate arranged within the internal space at another longitudinal end of the tubes, wherein at the other longitudinal end of the tubes the channels of the tubes are open and at the other longitudinal end of the tubes a communication between the outside of the plurality of filter elements and the inside of the plurality of filter elements is prevented, wherein the vessel further comprises an air distribution structure enclosing the port and adapted to distribute air introduced via the port for reaching the plural arrangements for filtering across a larger area than five times, in particular ten times, a cross sectional area of the port.

The vessel may comprise 50 to 150 membrane elements, each membrane element comprising plural straws. The vessel may have a (inner) diameter of 130 cm to 180 cm.

The vessel may in particular be at least approximately rotationally symmetric comprising a vessel cylinder portion in which the plurality of arrangements for filtering water are arranged parallel to each other (in particular such that the respective tubes are all oriented in a vertical direction parallel to each other). The vessel may comprise one or more plates arranged at different levels of the cylindrical portion of the vessel for supporting or holding the plural arrangements for filtering water. The vessel may further comprise a port at a top side for exiting filtered water. Furthermore, the vessel may comprise one or more side ports for exiting air during particular operation modes.

In particular, the vessel may comprise a bottom plate, a middle plate and a top plate, wherein the plurality of arrangements for filtering water may run through all the plates. Thereby, the plurality of arrangements for filtering water may be appropriately secured and oriented for proper operation. Furthermore, the vessel comprises the air distribution structure which may also be referred to as "umbrella" which may improve the cleaning of the plural filtering elements by substantially evenly distributing the air to all filter elements arranged within the vessel and not only to those which are close to the center of the longitudinal axis of the vessel, where the bottom port is located.

The radial extent of the air distribution structure (or its diameter) may amount to between 50% and 100% of the radial extent of the internal space of the vessel. The air distribution passages within the air distribution structure may be drilled, when the air distribution structure is manufactured from glass reinforced epoxy or some other polymer. The air passages may have a circular cross-section. In particular, the air distribution structure may comprise between 100 and 150 air passages, in particular 108 air passages and those may all be oriented and distributed towards all membrane positions, i.e. the positions of the plural filter elements. In particular, the number of filter elements (i.e. circular cylinder filter elements each comprising plural straws comprising membrane material) may be equal to the number of air passages within the air distribution structure. Furthermore, the positions of the air distribution passages may be chosen in accordance with positions of the plural filter elements.

According to an embodiment of the present invention, the air distribution structure is adapted to retain a portion of the air entered through the port from reaching filter elements radial closer to the port and to direct the portion of the air to filter elements radial farther away from the port, wherein the air distribution structure in particular comprises a portion of a curved shell, in particular of a spherical shell, in particular umbrella shaped, wherein the portion of the curved shell has air passages, in particular having a width between 25 mm and 50 mm.

When the air is re-distributed (coming from the bottom port) across a relatively large cross-sectional area of the vessel, a large number of filter elements may be exposed to the air bubble enriched water and may therefore be exposed to turbulence which may lead to a release of particles adhered to the outside surface of the tubes of the filter elements. Thereby, a cleaning may be more effective than compared to conventional systems.

According to an embodiment of the present invention, a ratio between a sum of cross sectional areas of air passages in a area portion of the air distribution structure and the area portion of the air distribution structure increases with increasing radial distance from the port.

It may be advantageous to retain more air from rising to the filter elements arranged within the vessel at smaller radial distances from the center of the vessel than air rising at larger radial distances, because the bottom port is arranged at the center of the vessel on the longitudinal axis of the vessel so that the largest volume or amount of air is injected into the vessel at the central location. The retained portion of the air is then redirected to areas farther radially away from the central longitudinal axis of the vessel such that those filter elements arranged farther away from the longitudinal axis of the vessel are also provided with air bubble enriched water for effective cleaning.

According to an embodiment of the present invention, a number of air passages and/or a width of the air passages increases with increasing distance from the port. Thereby, an advantageous re-distribution of the air introduced via the bottom port may be achieved for improving the cleaning procedure.

In particular, the air distribution structure may distribute the air evenly to all membrane elements but at the same time may not make any restriction for the vessel drain after the backwash. Thereby, these two requirements may be combined in a simple way according to embodiments of the present invention.

An advantage of the above-mentioned embodiments may be improved cleaning of the membranes and may secure an even better cleaning of all membranes throughout the whole vessel diameter. Thereby, the size of the holes or air passages within the air distribution structure may be defined, in order to give an even distributed airflow per area across the entire vessel (cross-section). In particular, the air distribution structure may comprise 108 air passages or between 100 and 200 air passages or holes. In particular, the shape, position and/or size of the air passages may be determined by performing airflow simulation experiments or computations.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings.

### Brief Description of the Drawings

Fig. 1 schematically illustrates a perspective view of a filter system according to an embodiment of the present invention comprising a vessel according to an embodiment of the present invention and an arrangement for filtering water according to an embodiment of the present invention;
Fig. 2 schematically illustrates a perspective view of a portion of an arrangement for filtering water (also called membrane element) comprising plural filtering elements (also called straws) which may be used according to embodiments of the present invention e.g. in the filter system of Fig. 1;
Figs. 3A and 3B illustrate longitudinal end portions of arrangements for filtering water according to the prior art and according to an embodiment of the present invention, respectively;
Fig. 4 schematically illustrates a perspective view of a portion of a filter system according to an embodiment of the present invention including an air distribution structure;
Fig. 5 schematically illustrates an air distribution structure which may be used in embodiments of the present invention;
Fig. 6 schematically illustrates a perspective view of an air distribution structure including an air injector that can be used in embodiments according to the present invention;
Figs. 7 and 8 schematically illustrate perspective views of air distribution structures which can be used in embodiments of the present invention.

### Detailed Description

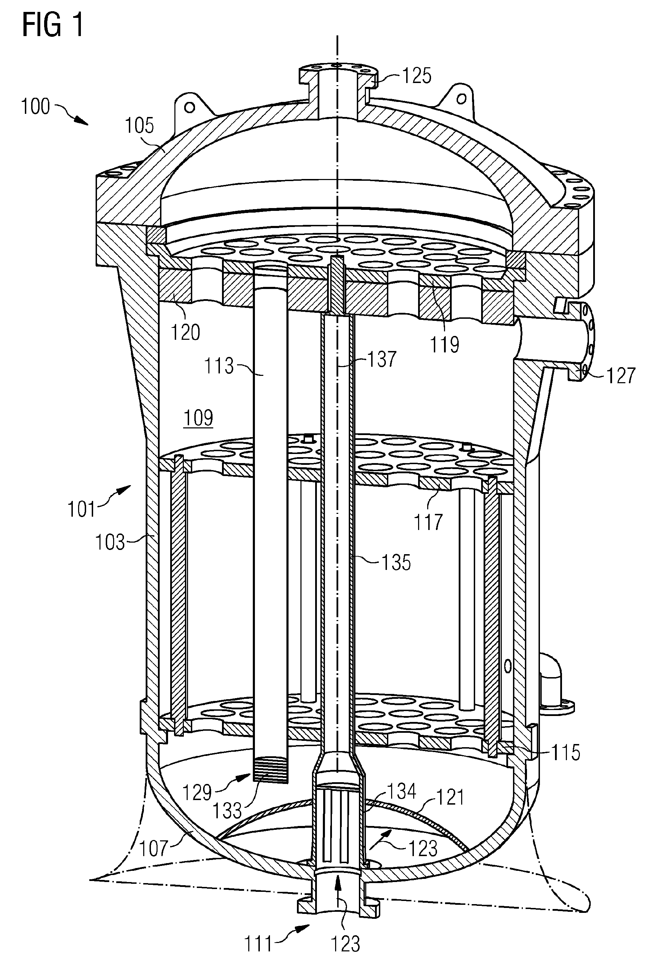

The illustration in the drawings is in schematic form. In the different drawings, reference signs relating to same or similar elements or structures are referenced with the same reference label differing only in the first digit. Therefore, for understanding a drawing in which a particular feature or element is not described in detail, the reader is referred to the description of this feature pertaining to another figure. The filter system 100 as schematically illustrated in Fig. 1 in a perspective view includes a vessel 101 comprising a sidewall 103, an upper wall 105 and a lower wall 107 for enclosing an internal space 109. The vessel 101 further has a bottom port 111 (also called vessel opening or nozzle having a flange) which allows entry of air (during a cleaning procedure) or entry of water to be cleaned (during a filtering procedure). Within the vessel 101, the filter system 100 comprises a plurality of arrangements 113 for filtering water from which only one arrangement for filtering water is illustrated in Fig. 1. Normally, a large number of arrangements 113 for filtering water, such as for example 60 to 150, in particular 60 or 108 arrangements for filtering water are enclosed within the internal space 109 of the vessel 101. The plurality of arrangements 113 for filtering water are running through a lower plate 115, a middle plate 117 and an upper plate 119 which plates 115, 117, 119 (and support plate 120) have respective circular holes for allowing the cylindrically shaped arrangements 113 for filtering water to run through the plates 115, 117, 119.

The vessel 101 further comprises an air distribution structure 121 which encloses the port 111 and which is adapted to distribute air 123 introduced via the port 111 for reaching the plural arrangements 113 for filtering water across a larger area than five times a cross-sectional area of the port 111.

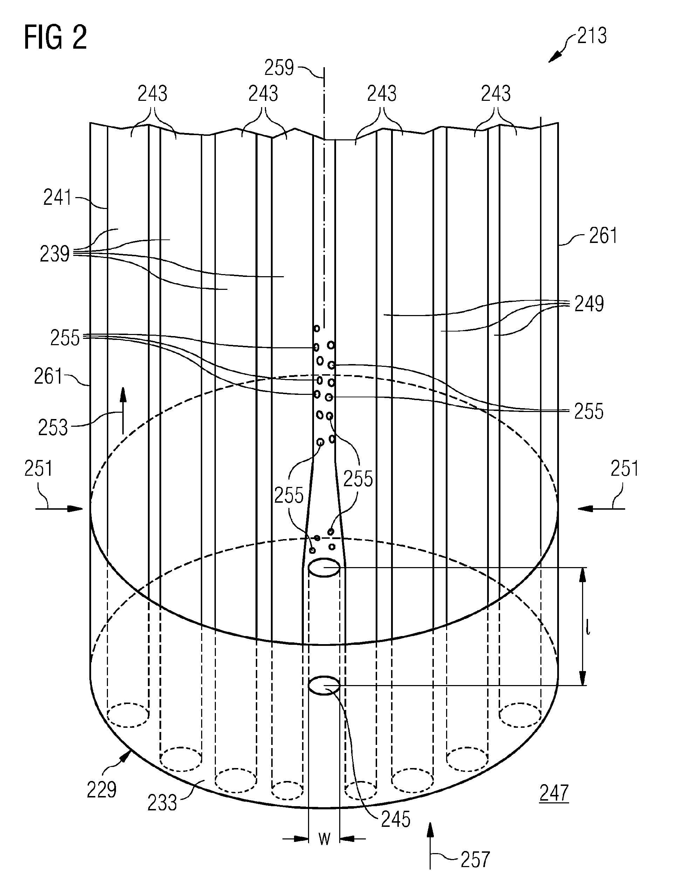

The filter system 100 further comprises a top port 125 (or vessel top opening) for allowing filtered water to leave the vessel 103 when the filter system 100 is operated in a filtering procedure or filtering mode. Furthermore, the vessel 101 comprises a side port 127 for different purposes, such as for allowing air to leave the vessel 101. The arrangement 113 for filtering water has a longitudinal end 129 (at the bottom end) and has another longitudinal end 131 (at the top end). Thereby, the longitudinal end 129 comprises a seal system 133 which will be described in more detail with reference to Fig. 2.

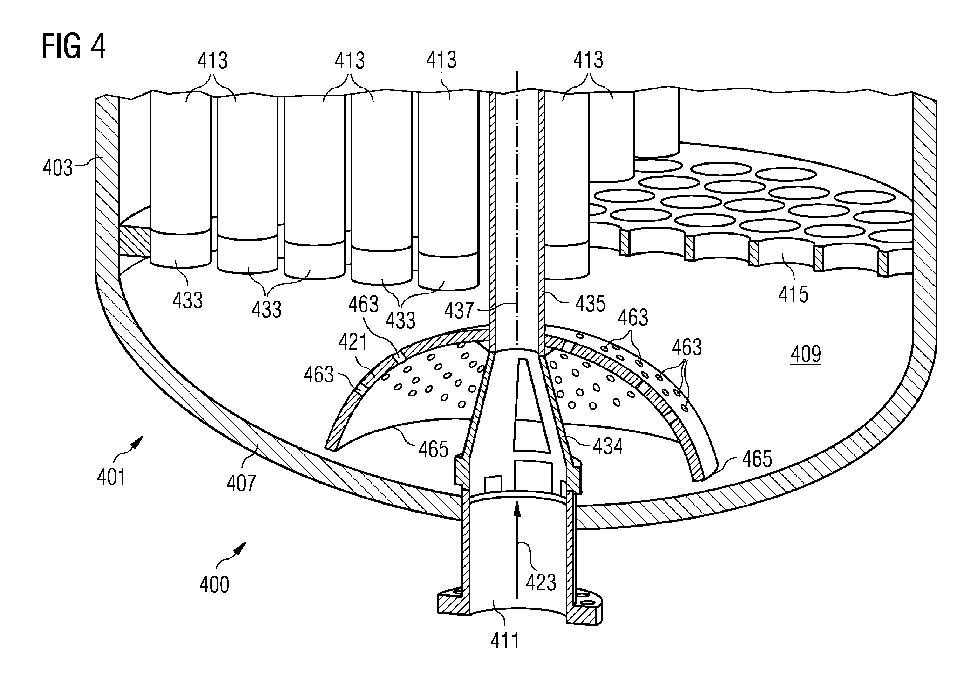

Furthermore, the air distribution structure 121 comprised in the filter system 100 will be described in further detail with respect to Figs. 4 to 8.

The filter system 100 illustrated in Fig. 1 further comprises an air injector or water injector 134 which allows air or water to be introduced via the port 111 into the internal space 109 of the vessel 101.

The filter system 100 further comprises a central bar 135 (which may be solid throughout) which is arranged at a central longitudinal axis 137 of the vessel 101 for supporting the plates 115, 117 and 119. Thereby, the central bar 135 as well as the air distribution structure 121 are made of glass reinforced epoxy (GRE) and are in particular integrally formed, i.e. one piece.

The filter system 100 may be operated during a filtering procedure and filter cleaning procedure above the sea level for example at a platform for filtering seawater during a gas/oil exploration application.

In Fig. 2, a lower or bottom portion of an arrangement 213 for filtering water (also called membrane element) is illustrated in a perspective view which may serve as the arrangement 113 comprised in the filter system 100 illustrated in Fig. 1. The arrangement 213 for filtering water comprises a plurality of filter elements (also called straws) 239 which are arranged side by side. The bundle of straws may also called an membrane element. Each of the filter elements or straws 239 comprises a tube 241 having not illustrated fine pores, allowing water to enter an inside channel 243 of the tube 241 but preventing particles having a size larger than a threshold size to enter the inside channel 243.

Further, the arrangement 213 for filtering water comprises a seal system (or potting) 233 for closing the channels 243 of the tubes 241 at the longitudinal ends 229 of the respective tubes 241. Thereby, the longitudinal ends are the bottom ends of the respective tubes 241. Thereby, the seal system 243 embeds the longitudinal end portions 229 of the filter elements 239 and comprises at least one opening 245 providing a communication (in particular flow of seawater in and out) between an outside 247 of the plurality of filter elements (or straw or tubes) 239 and an inside 249 of the plurality of filter elements 239, wherein the inside 249 is surrounded by tubes 241 but is being outside of the channels 243 of all the tubes 241.

As can be appreciated from Fig. 2, the plural filter elements 239 are oriented side by side and parallel to each other. Water 241 to be filtered may approach the filter elements 239 from the outer side and may pass through the fine pores of the tubes 241 into the inside channel 243 after filtering to become filtered water 253. The filtered water may then be transported inside the entire length of the straw or tube from the bottom end portion 229 to a top portion, may leave the respective channel 243 and may leave the filter system 100 via the top port 125, as is illustrated in Fig. 1.

During the filtering process, particles 255 having a size larger than the pore size of the fine pores of the filter elements 239 may adhere to outside surfaces of the tubes 241 and may tend to clog the membrane material of the tubes 241 i.e. the filter elements 239. Thereby, a filtering operation may be impaired. During a cleaning procedure of the filter elements 239, the filter elements 239 may be exposed to air enriched or air bubble enriched water 257 which may approach the arrangement 213 for filtering water from the bottom, in particular via entry of air 123 via the bottom port 111 which is then distributed by the air distribution structure 121, as is illustrated in Fig. 1.

The air bubble enriched water may cause vibrations and shaking of the filter elements 239 and may thereby result in release of the adhered particles 255 from the outside surface of the tube 241. The released particles 255 may fall downwards and in particular through the opening 245 and may thereby effectively be removed from the inside 249 of the arrangement 213 for filtering water.

As can be appreciated from Fig. 2, the plurality of filter elements 239 is arranged in a form of a circular cylinder and the opening 245 is arranged at a longitudinal axis 259 of the cylinder. As can be taken from Fig. 2, the tubes 241 surround the opening 245 and are in particular at least partially deformed such as to be bent away from the opening 245. In other embodiments of the present invention, more than one opening 245 is provided within the seal system 233. In the embodiment illustrated in Fig. 2, the seal system 233 is manufactured from solidified resin and the opening 245 is made by drilling.

The arrangement 213 for filtering water further comprises a support structure 261 enclosing the plurality of filter elements 239 and thereby forming an outside surface of the cylinder. Thereby, the support structure 261 strengthens the plural filter elements 239 and is made of a grating having plural holes to allow water entry. According to an embodiment of the present invention, around 6000 filter elements 239 are comprised in the arrangement 213 for filtering water.

A width w of the opening 245 may be between 5 mm and 15 mm and a length l of the opening 245 may amount to between 5 cm and 10 cm.

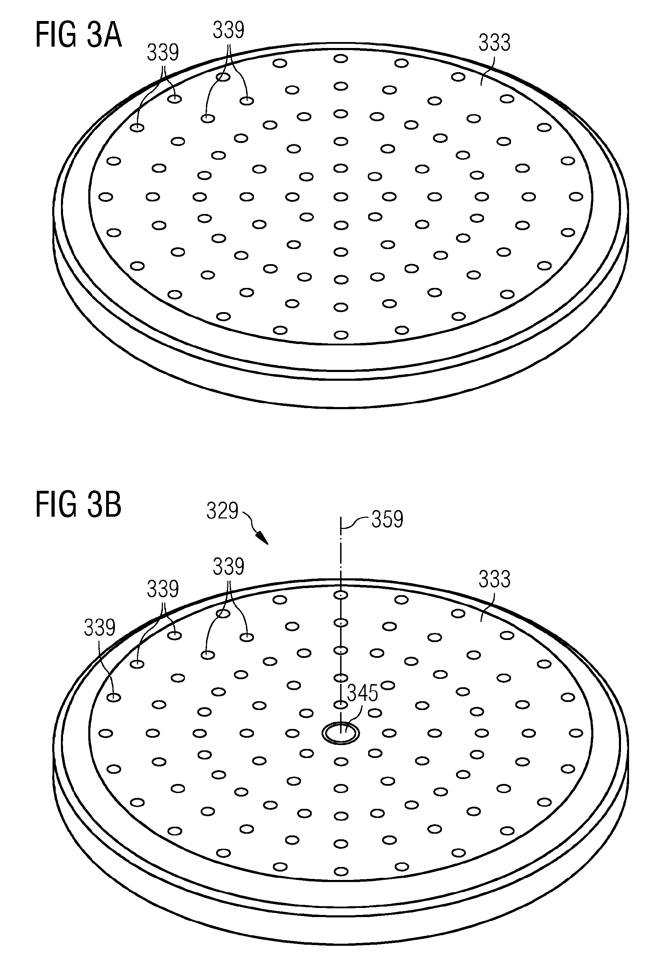

Fig. 3A illustrates a longitudinal end of an arrangement according to the prior art, while Fig. 3B illustrates the longitudinal end 329 of the arrangement 213 illustrated in Fig. 2. A seal system 333 embeds end portions of the filter elements 339 and an opening 345 is provided at the central symmetry axis 359 of the cylinder formed by the plural filter elements 339.

Fig. 4 schematically illustrates in a perspective view (partially broken away) of a portion of a filter system 400 comprising a plurality of arrangements 413 arranged parallel to each other and comprising a vessel 401 comprising an air distribution structure 421 and an air injector or water injector 434 which injects air or water 423 introduced via the port 411 into the internal space 409 of the vessel 401. Thereby, the air distribution structure 421 comprises a portion of a curved shell having plural air passages 463. In particular, the air distribution structure 421 comprises a retaining wall for retaining a portion of the air introduced in a region of the internal space 409 which is relatively close to the symmetry axis 437 of the vessel 401 and distributes this portion of air into regions of the internal space 409 which are farther away from the symmetry axis 437. The air distribution structure 421 has a circular edge 465 which is attached to an inside of the vessel 401 around the port 411.

As can be appreciated from Fig. 4, the air injector 434 has a conical shape and is attached to a central portion of the air distribution structure 421. Further, the central bar 435 is arranged at the central longitudinal axis 437 of the vessel 401 for supporting at least the bottom plate 415. In particular, the bar 435, the air distribution structure 421 and the air injector 434 are made of glass reinforced epoxy, in particular in an integral manner as a single piece. Also walls 103, 107 and 105 of the vessel 401 are made of glass reinforced epoxy.

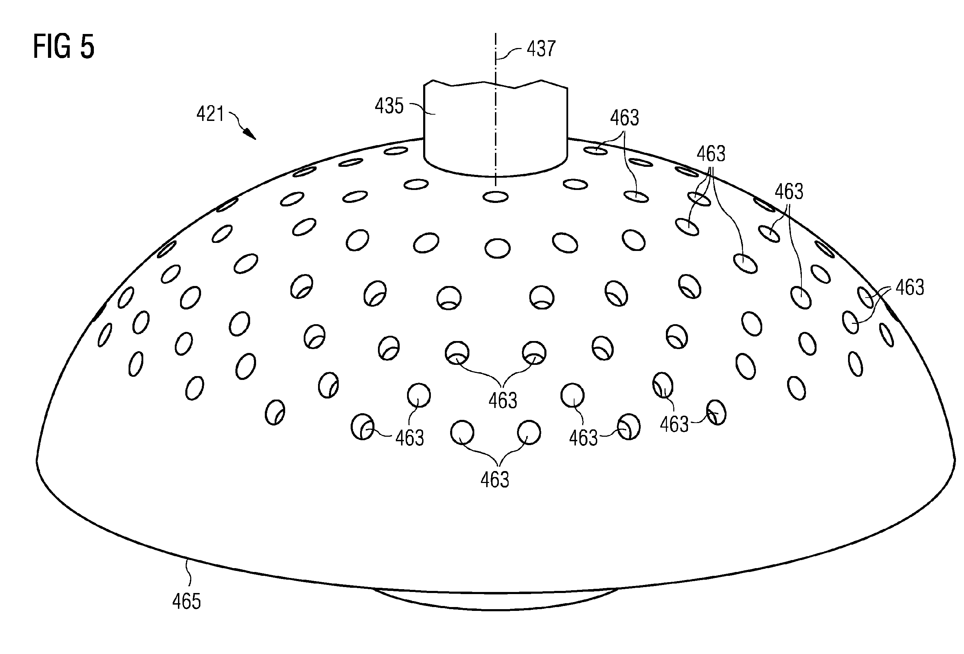

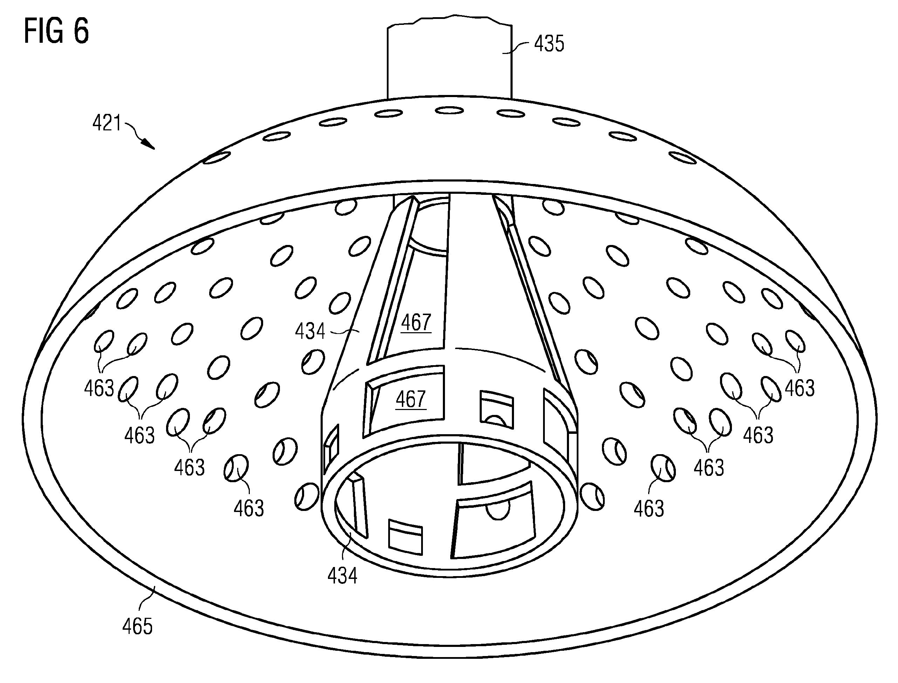

Fig. 5 schematically illustrates in a perspective upper view the air distribution structure 421 for illustrating the distribution of the air passages 463. As can be appreciated from Fig. 5 and also Fig. 6 showing the air distribution structure 421 in a bottom view, the number of air passages 463 increases with increasing distance from the longitudinal axis 437, to achieve an advantageous air distribution for cleaning the filter elements. In Fig. 6, also the air injector 434 is more clearly visible showing its large openings 467 and showing its taper shape.

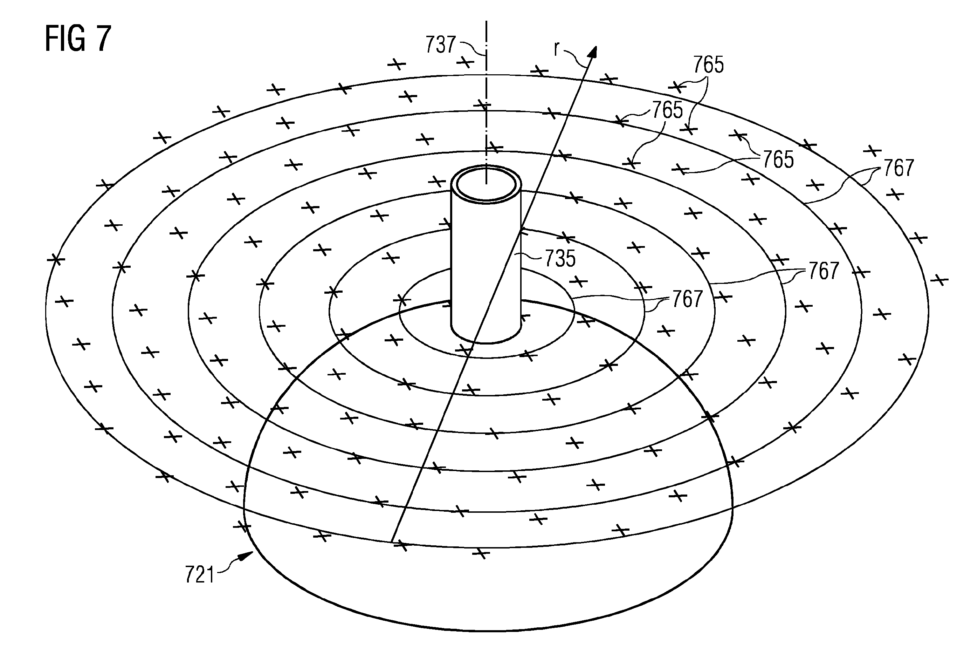

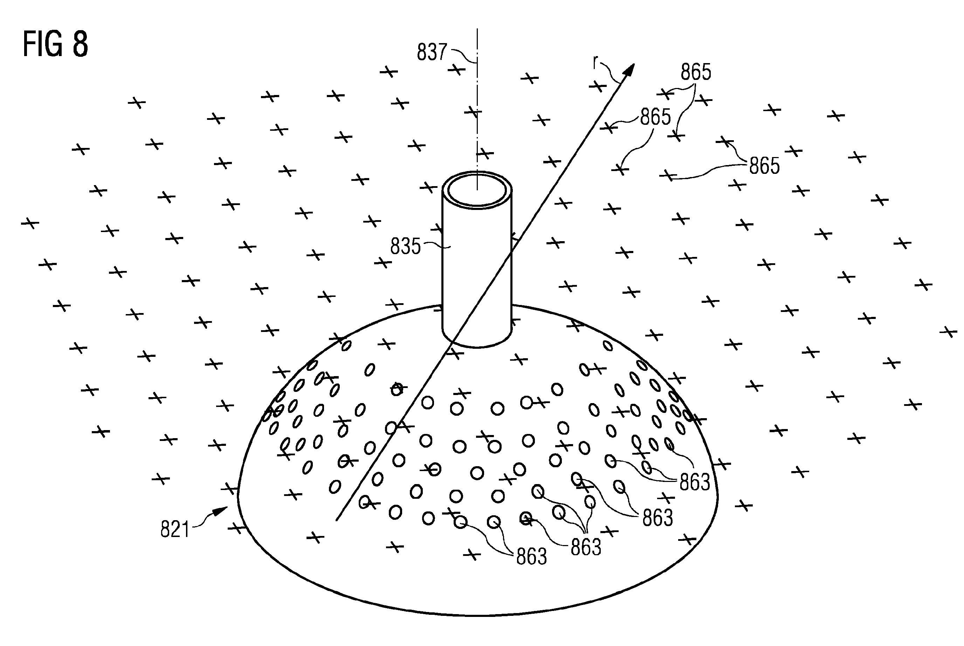

Figs. 7 and 8 illustrate further the distribution of air passages 863 in the air distribution structure 821 according to embodiments of the present invention. In particular, 108 air passages 863 are comprised in the air distribution structure 821 being integrally formed with the central bar 835. In other embodiments of the present invention, the width or size of the air passages 863 may vary with varying distance from the longitudinal axis 837 such that distribution of air to which the filter elements 413 or arrangements 413 for filtering water are exposed is more homogeneous than in conventional systems.

In Fig. 7 positions 765 of the plural filter elements arranged within the vessel when projected onto a plane perpendicular to the symmetry axis 737, 837 of the vessel, such as vessel 101 illustrated in Fig. 1 are illustrated. The projection positions 765, 865 belong to 108 filter elements disposed at different radial positions r (in Fig. 7 circles 767 having different radii are indicated). As can be taken from Fig. 8, to each of the projected positions 865, a respective air passage 863 is associated. Simulation of airflow through such an air distribution structure 821 may be employed in order to find appropriate positions of the air passages 863 such that air passing through a particular air passage reaches the associated filter element.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (213) for filtering water, in particular for injection into a bore well, the arrangement comprising:
a plurality of filter elements (239) arranged side by side, each filter element comprising a tube (241) having fine pores, allowing water to enter an inside channel (243) of the tube (241) but preventing particles having a size larger than a threshold size to enter the inside channel (243),
a seal system (233) for closing the channels (243) of the tubes at longitudinal ends (229) of the respective tubes,
wherein the seal system (233) has at least one opening (245) providing communication between an outside (247) of the plurality of filter elements (239) and an inside (249) of the plurality of filter elements (239), the inside (249) of the plurality of filter elements (239) being surrounded by tubes (241) but being outside the channels (243) of all the tubes.

2. Arrangement according to claim 1, wherein the plurality of filter elements (239) is arranged in a form of a circular cylinder, the at least one opening (245) is arranged on a longitudinal axis (259) of the cylinder in a center of the seal system (233), wherein in particular the at least one opening is a single opening.

3. Arrangement according to claim 1 or 2, wherein the longitudinal ends (229) of the tubes (241) surround the opening (245) in an annular manner, wherein in particular the opening has a circular cross section.

4. Arrangement according to one of the preceding claims, wherein the at least one opening comprises several openings arranged across a lateral extent of the seal system perpendicular to longitudinal axes of the tubes.

5. Arrangement according to one of the preceding claims, wherein the seal system (233) embeds the longitudinal ends (229) of the tubes (241) and closes spaces between the tubes at the longitudinal ends of the tubes.

6. Arrangement according to one of the preceding claims, wherein the seal system (233) comprises solidified resin, wherein in particular the opening is made by drilling.

7. Arrangement according to one of the preceding claims, further comprising:
a support structure (261) enclosing the plurality of filter elements (239), the support structure, in particular a grating, having a plurality of holes, in particular having a size between 5 mm x 5 mm and 10 mm x 10 mm, in particular 7 mm x 7 mm, wherein the plurality of filter elements further in particular comprises 5000 to 10000 filter elements.

8. Arrangement according to one of the preceding claims, wherein at least one of the tubes (241) comprises membrane material, in particular fiber membrane material, wherein in particular the fine pores have the threshold size between 0.01 to 0.1 micro meter, in particular between 0.03 and 0.05 micro meter, for filtering biological material and/or bacteria and/or shell and/or sand particles.

9. Arrangement according to one of the preceding claims, wherein the opening (245) has a width (w) between 5 mm and 15 mm, in particular between 7 mm and 12 mm, wherein in particular the opening has a length (l) between 5 cm and 10 cm, further in particular between 7 cm and 9 cm.

10. Method for filtering water, in particular for injection into a bore well, the method comprising:
allowing water (251) to be filtered to enter inside channels (243) of tubes (241) having fine pores and being comprised in a plurality of filter elements (239) arranged side by side,
preventing particles (255) having a size larger than a threshold size to enter the inside channels (243), wherein the inside channels (243) of the tubes (241) are closed at longitudinal ends (229) of the respective tubes (241) by a seal system (233); and
cleaning the plurality of filter elements by:
releasing particles (255) adhered at an outside of the tubes during filtering and
allowing the particles (255) to reach from an inside (249) of the plurality of filter elements (239) to an outside (247) of the plurality of filter elements (239) via at least one opening (245) in the seal system (233), the inside (249) of the plurality of filter elements (239) being surrounded by tubes (241) but being outside the channels (243) of all the tubes (241).

11. Method according to claim 10, wherein the cleaning further comprises:
creating air bubble enriched water by introducing air (257, 123) into water;
exposing the plurality of filter elements (239) to the air bubble enriched water, thereby releasing at least some of the particles (255) adhered to the outside of the tubes (241).

12. Filter system (100) for filtering water (from suspended particles), comprising:
a vessel (101) having an internal space (109) and a port (111) at a bottom side for allowing entry of air (123) into the internal space (109) partially filled with water during a procedure for cleaning plural filter elements (239);
a plurality of arrangements (113) for filtering water according to one of the preceding claims arranged within the internal space (109);
a plate (119) arranged within the internal space at another longitudinal end (131) of the tubes (241),
wherein at the other longitudinal end (131) of the tubes the channels (243) of the tubes (241) are open and at the other longitudinal end of the tubes (241) a communication between the outside of the plurality of filter elements and the inside of the plurality of filter elements is prevented,
wherein the vessel (101) further comprises:
an air distribution structure (121, 421) enclosing the port (111, 411) and adapted to distribute air (123, 423) introduced via the port (111, 411) for reaching the plural arrangements (413) for filtering across a larger area than five times, in particular ten times, a cross sectional area of the port (111, 411).

13. Filter system according to claim 12, wherein the air distribution structure (121, 421) is adapted to retain a portion of the air entered through the port from reaching filter elements radial closer to the port and to direct the portion of the air to filter elements radial farther away from the port,
wherein the air distribution structure in particular comprises a portion of a curved shell, in particular of a spherical shell, in particular umbrella shaped, wherein the portion of the curved shell has air passages, in particular having a width between 25 mm and 50 mm.

14. Filter system according to claim 12 or 13, wherein a ratio between a sum of cross sectional areas of air passages in a area portion of the air distribution structure and the area portion of the air distribution structure increases with increasing radial distance from the port.

15. Filter system according to one of claims 12 to 14, wherein a number of air passages and/or a width of the air passages increases with increasing distance from the port.
